**Europäisches Patentamt**

**European Patent Office**

**Office européen des brevets**

(19)

(11) Publication number: **0 104 258**

**A1**

(12) # EUROPEAN PATENT APPLICATION
published in accordance with Art. 158(3) EPC

(21) Application number: **83900966.9**

(22) Date of filing: **22.03.83**

Data of the international application taken as a basis:

(86) International application number:
**PCT/JP83/00088**

(87) International publication number:
**WO83/03474 (13.10.83 83/24)**

(51) Int. Cl.³: **G 01 N 31/08**
**B 01 D 15/08**

(30) Priority: **23.03.82 JP 46072/82**
**23.03.82 JP 40733/82 U**

(43) Date of publication of application:
**04.04.84 Bulletin 84/14**

(84) Designated Contracting States:
**BE DE FR GB NL**

(71) Applicant: **GASUKURO KOGYO CO.LTD.**
**12-18 Nishishinjuku 6-chome Shinjuku-ku**
**Tokyo 160(JP)**

(72) Inventor: **TOKUDA, Akira**
**MuSashi Factory of Gasukuro Kogyo Co. Ltd. 237-2**
**Sayamagahara Iruma-shi Saitama 358(JP)**

(72) Inventor: **FUKUDA, Tomio**
**MuSashi Factory of Gasukuro Kogyo Co. Ltd. 237-2**
**Sayamagahara Iruma-shi Saitama 358(JP)**

(74) Representative: **Klauber, Tomas**
**Patentbyran Klauber & Co. AB Kungsgatan 44**
**S-111 35 Stockholm(SE)**

(54) **CHROMATOGRAPHY STICK AND METHOD FOR DEVELOPING SAMPLE USING THE SAME.**

(57) A chromatography stick for separating and collecting two or more ingredients contained in a sample according to chromatography, and a method for the separation and collection. This stick enables to develop a sample uniformly and in parallel and can be repeatedly used by cutting the sample-developed portion, thus being useful for collecting a large quantity of a sample ingredient. The stick is composed of only an adsorbing material such as silica gel and a necessary binder and is formed as a column or plate. In conducting chromatography, a sample is adsorbed at the bottom of the stick, and the bottom is placed on a plate to which a solvent can be freely supplied.

FIG. 4

FIG. 6

EP 0 104 258 A1

Croydon Printing Company Ltd.

TITLE MODIFIED
see front page

- 1 -

# CHROMATOGRAPHY STICK AND SAMPLE DEVELOPING METHOD

## Technical Field

This invention relates to chromatography stick which is utilized in a chromatography technique wherein silica gel is used in separating and collecting a sample including two or more components to develop and separate respective components, and is good in separating characteristics and is large in collected amounts and, also, relates to a sample developing method utilizing the stick.

## Background Art

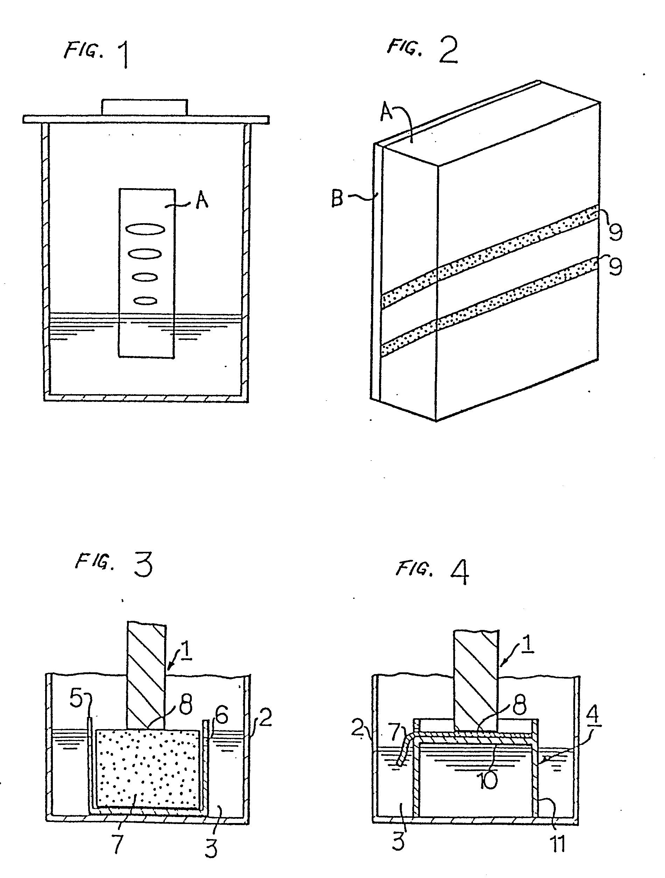

Recently, a sample developing method has been utilized wherein silica gel is thinly applied on a glass plate, and is dried to form a thin layer of silica gel, then, one or two drops of a sample is attached on one end of the layer, and the layer is dipped in a solvent such as benzene or kerosine, thereby developing the sample and separating and collecting components of the sample by utilizing respective rising up rates of the components. According to prior art wherein the thin layer of silica gel A is formed on a glass plate B, there are shortcomings such that since the portion adjacent to the glass plate is highly dried in the manufacturing process the rate of adsorption differ between the portion adjacent to the glass plate and the outer portion remote from the glass plate, thus, the developing condition on the silica gel is not uniform (refer to Fig. 1). Further, when the silica gel is thickly coated, there is a tendency that samples are mixed in cutting the silica gel to collect samples. As the result, it is not possible to coat thickly the silica gel, thus, a large amount of the sample cannot be developed and the collected amounts of samples cannot be increased. Further, since the sample develops at an inclined form the separation necessitates a large distance, thus, the silica gel cannot usually be used two times or more. The present invention aims to provide a chromatography member which enables to develop the sample at a short distance, whereby it is possible to use the member for several times since a substantial length of non-used portion is left when a sample developed portion is cut off. Further, the invention aims to provide a chromatography member which enables to develop the sample uniformly and in parallel and to prevent the mixing of components of the sample. Further, the development of the sample is easy and a large amount of the sample can be collected. Further, the invention aims to provide a sample developing method which enables to develop the sample by simply mounting a stick on a mounting stand, thus the method is very simple and extremely practical.

Disclosure of the Invention

Accordingly, the chromatography member according to the invention is formed solely of adsorptive material such as silica gel or the like and, if necessary, mixed with a binder such as plaster or the like and is formed to have a column-like or plate-like configuration. Whereby, the development of the sample is uniform and in parallel, the mixing of components of the sample is prevented, and the length of sample developed portion is short thereby permitting the usage over several times.

Further, according to the invention, the sample is attached on the bottom surface of heretofore described chromatography member, and the member is mounted on a mounting stand to which a solvent is freely supplied. Whereby, a large amount of components of the sample can easily be collected by simply mounting the chromatography member on a mounting stand.

Brief Description of the Drawings

Fig. 1 is a schematic explanatory view of prior art method;

Fig. 2 is a side view showing the essential portion of Fig. 1;

Fig. 3 is a longitudinal sectional view of an embodiment of the invention;

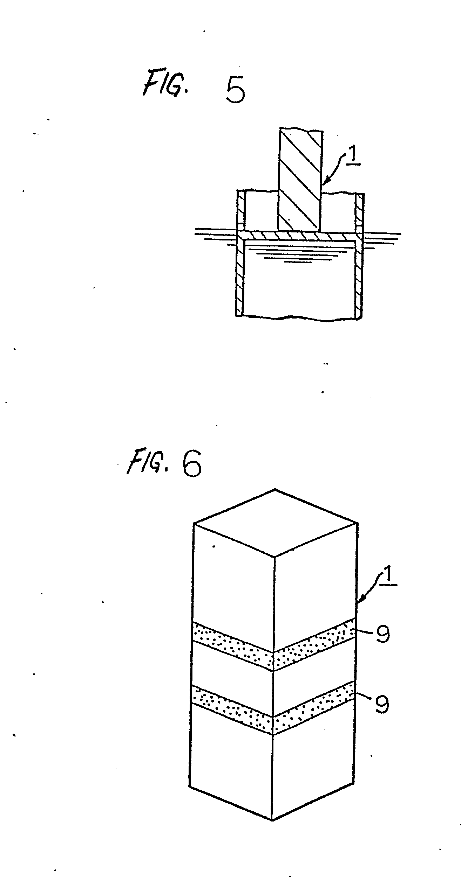

Fig. 4 and Fig. 5 are front views of other embodiments of the invention; and

Fig. 6 is a perspective view of a stick of the invention showing a sample developed condition.

Best Mode for Carrying Out the Invention

The invention will hereinafter be explained in detail with respect to embodiments shown in the drawings, wherein shown at 1 is a stick formed of an adsorptive material such as silica gel, alumina, cellulose, polyamide and the like, and mixed with a required binder material such as plaster to form a desired configuration such as a column-like or plate-like shape. Such column-like or plate-like shaped member is defined as stick. The materials are dissolved in water and are formed to have a desired configuration and, thereafter, dried at about 110°C to strengthen the adsorptive power in forming the stick 1. Shown at 2 is a container for receiving therein solvent 3 such as kerosene or benzene, and a mounting stand 4 is mounted therein. The mounting stand 4 is formed of a box-like member 5 having a suitable number of through holes 6, 6, ... in the circumference thereof and in a same plane. Shown at 7 is a liquid rising up member formed of material such as sponge, guaze, asbestos, glass and the like having the capillarity function and received in the box-like member 5 with the upper surface thereof being positioned above the through holes 6, 6, ... in the box-like member. The solvent 3 enters into the box-like member 5 through the holes 6, 6, ... so that the liquid rising up member contains the solvent 3 as a whole. Next, description will be made with respect to the usage. A sample 8 is attached on the bottom surface of the stick 1 and the stick 1 is mounted on the liquid rising up member 7. When the cross-section of the stick 1 is a stable form such as rectangular or circular the stick itself is positioned upright and, when the cross-section is an instable form such as plate or the like the stick is leaned on a side wall of the container 2 with the height of which being increased or is leaned on other supporting member so as to retain the stick as upright as possible. The solvent 3 soaks into the stick 1 from the bottom surface thereof and the sample 8 attached to the bottom surface is developed. If the solvent 3 is positioned upwards of the portion to which the sample 8 is attached, the solvent moves upward without developing the sample. The sample 8 is developed to form separated layers 9, 9, ... due to the difference in the adsorption of respective components with respect to the stick 1. When the separation has sufficiently been made, the stick 1 is cut by respective separated layers 9, 9 ... and the samples of respective components are obtained. The sample is used for qualitative or quantitative analysis as desired through steps such as solvent extracting step and the like.

The mounting stand 4 may be constituted of, without utilizing the box-like member 5, a stand portion 10 and a leg portion 11, and the liquid rising up member 7 is mounted on the stand portion 10, which is formed of such as a plate member, an L-shaped mesh member or a perforated plate, with the lower end or downwardly depending portion of the liquid rising up member 7 being dipped in the solvent 3 so as to wet the liquid rising up member 7. Further, the liquid rising up member may be omitted with the solvent 3 being received in the container 3 at a level same to the stand portion 10 of the mounting stand 4.

According to the method of the invention as heretofore described, a mounting stand is positioned in a container receiving therein solvent, the sample is attached to the bottom surface of a chromatography stick which is formed of silica gel and, if necessary, mixed with a binder such as plaster and is formed to have plate-like or column-like configuration, and the chromatography stick is mounted on the mounting stand to which the solvent is supplied, thus, it is possible to increase the cross-sectional area of the stick, and to increase the amount of the sample being adsorbed thereby obtaining large amount of the sample components. Further, there is no obstruction against the development of the sample, and, it is possible to obtain accurate sample components since the separation characteristic are very good.

Capability of Exploitation in Industry

As heretofore described, the chromatography stick and the sample develping method according to the invention, the difference in adsorptive characteristics of the sample are not observed, the sample is accurately separated into respective components, the separation and development of the sample are reliable and accurate without having the risk of mixing. Further, the portion on which the sample is developed is cut and the sample is collected, but the development is performed on a short distance when the separation is properly made, thus, the stick can be used over several times. Further, the stick can be formed into a thick and large form without causing any trouble, thus, it is possible to collect large amount of the sample or the components of the sample, whereby analysis can easily and accurately be performed.

Claims:

1.      A chromatography stick formed solely of adsorptive material such as silica gel and mixed with required binder material to form into a column-like or plate-like configuration.

2.      A sample developing method comprising:
        disposing a mounting stand in a container receiving therein a solvent;
        forming a chromatography stick of silica gel and, if required, mixed with a binder such as plaster to have a column-like or plate-like configuration;
        attaching a sample on the bottom surface of the chromatography stick; and
        mounting the chromatography stick on the mounting stand to which the solvent is supplied.

3.      A sample developing method as set forth in Claim 2, wherein, a liquid rising up member having the capillarity such as asbestos, glass, sponge and the like is disposed on the mounting stand, and the lower end of said member is dipped in the solvent with the upper portion thereof being positioned above the level of the solvent.

4.      A sample developing method as set forth in Claim 2, wherein the solvent is supplied into the container such that the solvent contacts directly with the chromatography stick which is mounted on the mounting stand.

FIG. 1

FIG. 2

FIG. 3

FIG. 4

FIG. 5

1

FIG. 6

1

9

9

# INTERNATIONAL SEARCH REPORT

**0104258**

International Application No. **PCT/JP83/00088**

## I. CLASSIFICATION OF SUBJECT MATTER (if several classification symbols apply, indicate all) ³

According to International Patent Classification (IPC) or to both National Classification and IPC

Int. Cl.³  G01N 31/08, B01D 15/08

## II. FIELDS SEARCHED

### Minimum Documentation Searched ⁴

| Classification System | Classification Symbols |
|---|---|
| I P C | G01N 31/08, B01D 15/08 |

| | Documentation Searched other than Minimum Documentation to the Extent that such Documents are Included in the Fields Searched ⁶ |
|---|---|
| | Jitsuyo Shinan Koho          1926 – 1983<br>Kokai Jitsuyo Shinan Koho    1971 – 1983 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP,A, 55-20244 (Kyoto Ceramic Kabushiki Kaisha)  13. February. 1980  (13. 02. 80) | 1 |
| X | JP,A, 54-9691  (Pilot Precision Kabushiki Kaisha)  24. January. 1979  (24. 01. 79) | 1 |
| X | JP,A, 50-26595 (Regis Chemical Co.)  19. March. 1975  (19. 03. 75) | 2, 4 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| June 10, 1983  (10.06.83) | June 13, 1983  (13. 06. 83) |

| International Searching Authority ¹ | Signature of Authorized Officer ²⁰ |
|---|---|
| Japanese Patent Office | |

Form PCT/ISA/210 (second sheet) (October 1981)